# EUROPEAN PATENT APPLICATION

(11) **EP 1 176 584 A2**
(43) Date of publication of application: **30.01.2002**
(21) Application number: 01117623.7
(22) Date of filing: 24.07.2001
(51) Int. Cl.: G11B 5/004, G11B 5/48, G11B 5/76, G11B 5/09

(54) **Magnetic record/reproduce apparatus for recording/reproducing large amounts of data at ultra-high speed using a perpendicular magnetic recording mode**

(30) Priority: 24.07.2000 JP 2000221814
(71) Applicant: Tohoku Techno Arch Co., Ltd., Sendai-shi, Miyagi 980-0845 (JP); Toshinobu Futagawa, Miyazaki-ken (JP)
(72) Inventor: Nakamura, Yoshihisa, Sendai-shi, Miyagi-ken (JP); Muraoka, Hiroaki, Sendai-shi, Miyagi-ken (JP); Futagawa, Toshinobu, Miyazaki-shi, Miyazaki-ken (JP)
(74) Representative: Wagner, Karl H., Dipl.-Ing.

(57) **Abstract**

The magnetic record/reproduce apparatus (10) for recording and reproducing large amounts of data at ultra-high-speed using a perpendicular magnetic recording mode, comprises: at least a cylinder (12) having a perpendicular magnetic recording layer provided on at least the inner or outer surface thereof; a plurality of magnetic heads (14) arranged to face the perpendicular magnetic recording layer of the cylinder (12); a rotating means (13) for rotating at least one of the cylinder (12) and the plurality of magnetic heads (14) in relation to the other; a linear driving means (16) for moving at least the cylinder (12) or the plurality of magnetic heads (14) along the axial direction of the cylinder (12); and a record/reproduce means for recording and/or reproducing data on the perpendicular magnetic recording layer (30).

## Description

### BACKGROUND OF THE INVENTION

### Field of the Invention

The present invention relates to a data record/reproduce apparatus and particularly to a perpendicular magnetic record/reproduce apparatus for recording/reproducing large amounts of data at ultra-high-speed.

### Description of the Related Art

As the current trend for joining in the Internet society is quickly spread, it has encouraged the fusion of communications technologies and computer technologies and boosted the development of various softwares. Accordingly, the use of multimedia data including still and motion video data and audio data is common and the amount of such data per application to be processed is dramatically increased. This essentially requires mass storage of data as a database. Also, as the number of users of the Internet is burst, advanced on-demand response systems have been demanded for allowing the database to be randomly accessed by an unlimited number of the users. In other words, required are both high speed operation and mass storage capacity of the storage systems for storage of various data.

For satisfying the above requirements, the prior art systems have increased the areal density of storage at as a high annual rate as 60 to 100 %. However, as the number of grains to be used now comes close to its limit in the existing longitudinal magnetic recording mode, it is now found difficult to provide improvement in both the S/N ratio (signal to noise ratio) and the magnetic signal stability influenced by thermal decay. Accordingly, the development for mass-storage may soon reach a barrier of technology. For high-speed operation, there are only conventional approaches including increase of the disk revolution and improvement of the head access or the disk array system. Apparently, such conventional approaches are too ordinary to meet the up-to-date requirements for the progressing Internet society technology. In the field of recording reproducing system technologies, a substantial breakthrough for implementing the two requirements is much desired.

An effective system for eliminating the above drawbacks is proposed in the form of a cylindrical data storage apparatus (a cylindrical type high-speed information record/reproduce apparatus) (US Patent No.5, 754,517). The apparatus has a cylindrical medium which runs at ultra high speed and a group of heads placed along in a herical locus fashion oppositely to the cylindrical medium, for example, for movement forward and backward to scan thoroughly the cylindrical medium at very short cycles. When all recorded data are output in circulation to fall the maximum wait time in a cycle period, the apparatus can easily realize the on-demand response system. The system of the apparatus is applicable to the existing recording methods including the longitudinal magnetic recording mode and more advantageous than the disk system in the amount of data storage and the time for accessing. However, since the longitudinal magnetic recording mode is going to face its technical limit before long, it is desired for exercising the advantages of the system to develop a novel recording method.

We, the inventors of the present invention, have found from perpetual studies that an ideal system for satisfying both the requirements for the mass storage and the ultra-high-speed operation is feasible with a cylindrical high-speed record/reproduce apparatus or more particularly an ultra-high-speed record/reproduce apparatus with a cylindrical recording medium arranged compatible with a perpendicular magnetic recording mode which is one of the promising next-generation recording modes replacing the longitudinal magnetic recording mode. The perpendicular magnetic recording mode unlike the longitudinal magnetic recording permits the magnetic anisotropy of the recording medium to be increased, thus inhibiting bit records from being demagnetized by thermal decay. Also, as the direction of magnetism is arranged perpendicular to the magnetic layer of the recording medium, the recording density can significantly be increased. The perpendicular magnetic recording mode exhibits various drawbacks to be eliminated when used with any conventional disk type recording medium in practice. Those drawbacks with the disk type recording medium may effectively be eliminated by shifting the recording medium from a disk shape (a flat-fare disk medium) to a cylindrical shape (a curved-face cylindrical medium), as will be explained below.

The perpendicular magnetic recording mode is much advantageous as remarkably higher in the recording density than the longitudinal magnetic recording mode. Its studies are only focused on the application to the flat recording surface of a disk medium. When the perpendicular magnetic recording mode is used with a flat disk recording medium, it creates the following drawbacks.

The perpendicular magnetic recording mode employs commonly a dedicated magnetic head or so-called single-pole-type magnetic head. As the head develops a long write magnetic field which extends along the direction of running-line, the angle between the tangent of the recording track to the movement direction on the disk recording surface and the mechanical center line of the head unit, namely the skew angle, can hardly be increased. Also, the skew angle is different between the tracks at an inner side and at an outer side of the disk medium. This hardly allows the single-pole-type magnetic head to be minimized in the track pitch.

The disk recording medium causes the head to be sticking to its flatrecording surface when its movement is ceased. For prevention of the above sticking event, the disk record/reproduce system may have an uneven texture provided on the surface of the disk recording medium or a means for retracting the head when the movement of the disk recording medium is canceled while the increase of the recording density is sacrificed. It is a troublesome task to form the undulated surface of the disk or provide the means for retracting the head. In addition, this inhibits the head to be positioned close to the recording surface of the disk, hence failing to increase the recording density.

It is also needed in the disk recording medium to have the magnetic anisotropy applied in radial directions for inhibiting the generation of domain walls on the soft magnetic lining layer of perpendicular magnetic recording medium which may generate unwanted noises. In technical method, the magnetic anisotropy can hardly be applied in radial directions and this is one of the primary disadvantages of the disk recording medium.

Moreover, the disk recording medium is processed at a high temperature for depositing a magnetic recording layer to provide the recording surface of high levels of coercive force and resolution and it may be susceptible to physical deflection. As a result, the disk recording medium will hardly be improved in the precision and stability.

In the disk record/reproduce system, the disk medium carries a clock record data saved in the leading part of each sector as a sync-area. As a result, the data recording area will be reduced and the clock timing may often be disrupted by a noise or a change in the rotating motion of the disk. Although such an error is compensated by encoding the data before being recorded, the efficiency of coding process will be declined.

The disk recording system is further susceptible to disturbance of external magnetic fields on the single-pole-type magnetic head and may thus drop recorded signals.

### SUMMARY OF THE INVENTION

The foregoing drawbacks with the conventional disk record/reproduce system can effectively be eliminated by shifting the object to be applied for the perpendicular magnetic record mode from the flat-face disk medium to the curved-face fistulous cylinder medium, tubular shape cylinder.

Firstly, each magnetic head is arranged to face the cylindrical base surface (or the perpendicular magnetic recording layer) of a cylinder so that its center line extends at a right angle to the axial line of the cylinder. This allows the skew angle to become substantially nil. Accordingly, the pitch between two adjacent recording tracks for the single-pole-type magnetic head can be narrowed, which is difficult with the conventional disk record/reproduce system.

Secondly, the magnetic head is held in linear contact with the cylindrical base surface. This can eliminate the effect of stiction between the head and the recording surface of the cylindrical base.

Thirdly, the cylinder is increased in the mechanical rigidity due to its tubular shape even if its material has a reduced thickness. This allows the cylinder to be reduced in the weight and its perpendicular magnetic recording layer to be deposited under a higher temperature condition. Accordingly, the coercive force and the resolution can be improved. In addition, the distance between two bearings of the cylinder is reduced. As a result, the rotating motion of the cylinder will produce a minimum of deflection and thus be stable at high speeds, permitting the magnetic head to be designed to fly lower height.

Fourthly, for example, a couple of dedicated tracks for storage of the clock signal are provided on both ends respectively of the recording surface of the cylinder to face the corresponding clock signal heads. This allows the clock signal to be readily read out without difficulty.

Fifthly, the cylinder is made of a soft magnetic material and the magnetic recording layer is provided on the inner side of the cylinder. This can magnetically shield the single-pole-type magnetic heads from substantially every noise generated by external magnetic fields.

### BRIEF DESCRIPTION OF THE DRAWINGS

Fig. 1 is a schematic cross sectional view of a first embodiment of the magnetic record/reproduce apparatus according to the present invention;
Fig. 2 is a schematic cross sectional view of a second embodiment of the magnetic record/reproduce apparatus according to the present invention;
Fig. 3 is a view schematically showing the substantial relationship between the reference cylinder width and the headwidth (the head width arranged greater than the reference cylinder width);
Fig. 4 is a view schematically showing the substantial relationship between the reference cylinder width and the head width (the head width arranged smaller than the reference cylinder width);
Fig. 5 is a view showing the (linear) arrangement of the heads shown in Fig. 3 for scanning at synchronism the corresponding number of reference cylinder widths;
Fig. 6 is a view showing the (linear) arrangement of the heads shown in Fig. 4 for scanning at synchronism the corresponding number of reference cylinder widths;
Fig. 7 is a view showing the (spiral) arrangement of the heads for scanning at synchronism the corresponding number of reference cylinder widths;
Fig. 8 is a view showing the arrangement of a single head for scanning three reference cylinder widths at once;
Fig. 9 is a view showing the arrangement of the heads shown in Fig. 8 for scanning the reference cylinder members;
Fig. 10 is a perspective view showing the relationship between a cylinder and a head unit;
Fig. 11 is an enlarged perspective view of the head;
Fig. 12 is a cross sectional view showing the relationship between the cylinder and the head;
Fig. 13 is a view showing the relationship between data tracks and clock signal tracks on the cylinder;
Fig. 14 is a diagram showing the clock signal and the data signal;
Fig. 15 is a schematic cross sectional view of a third embodiment of the magnetic record/reproduce apparatus according to the present invention;
Fig. 16 is a schematic cross sectional view of a fourth embodiment of the magnetic record/reproduce apparatus according to the present invention;
Fig. 17 is a schematic cross sectional view of a fifth embodiment of the magnetic record/reproduce apparatus according to the present invention; and
Fig. 18 is a view explaining change in the skew angle on a disk drive apparatus.

### DETAILED DESCRIPTION OF THE PREFERRED EMBODIMENTS

Some embodiments of a magnetic record/reproduce apparatus of the present invention will be described. The present invention is not limited to the embodiments but the teachings of the appended claims. While the present invention is directed towards a magnetic recorder apparatus for recording data on a perpendicular magnetic recording layer, a magnetic perpendicular apparatus for reproducing data recorded on the perpendicular magnetic recording layer, and a magnetic record/reproduce apparatus for recording and reproducing data on a perpendicular magnetic recording layer, the magnetic record/reproduce apparatus described herein includes all the above means.

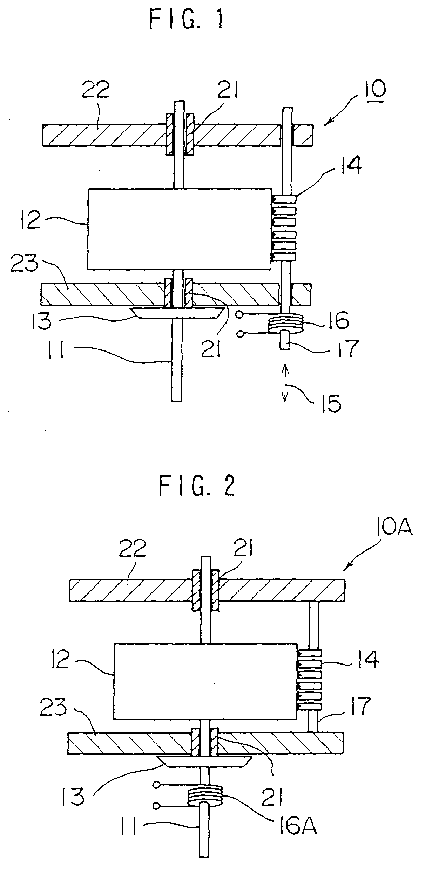

Fig. 1 is an overall schematic view of the magnetic record/reproduce apparatus showing a first embodiment of the present invention. As shown in Fig. 1, the magnetic record/reproduce apparatus of the first embodiment denoted by 10 is designed for recording/reproducing large amounts of data at ultra-high-speed. The magnetic record/reproduce apparatus 10 comprises substantially a cylindrical medium or cylinder 12 fixedly mounted to a central axis or center shaft 11 and arranged having a perpendicular magnetic recording layer provided on a surface thereof, an electric motor 13 for rotating the cylinder 12, a plurality of magnetic heads 14 arranged to face the perpendicular magnetic recording layer on the surface of the cylinder 12, an actuator 16 for moving the magnetic heads 14 in two opposite directions denoted by the arrow 15 along the axial direction of the center shaft 11 of the cylinder 12, and a pair of support plates 22 and 23 to which the center shaft 11 is rotatably mounted at both ends by two bearings 21. The electric motor 13 is a rotating means for rotation of at least one of the cylinder 12 and the magnetic heads 14 relative to the other while the actuator 16 is a linear driving means for moving at least one of the cylinder 12 and the magnetic heads 14 relative to the other along the axial direction of the cylinder 12. The rotating means and the linear driving means incorporate a driving mechanism for moving the cylinder 12 and the magnetic heads 14 to desired relative locations. In practice, the magnetic heads 14 are connected to a means for feeding the heads 14 with recording currents and an electronic circuit for amplifying and converting reproduce signals received from the heads 14 into their digital form. Those arrangements are well known and their description will be omitted. While the first embodiment shown in Fig. 1 employs the single cylinder 12, two or more cylinders which are different in the diameter may be provided in concentric arrangement on both, outward and inward, sides of the cylinder 12.

In the magnetic record/reproduce apparatus 10, as the cylinder 12 rotates, its recording tracks run in a circle about the cylinder 12 for allowing the magnetic heads 14 to record (write) and/or reproduce (read) sizes of data. The magnetic heads 14 are aligned in a row along the axis of the cylinder 12 and can thus be moved together upward and downward along the axial direction of the center shaft 11 by the action of the actuator 16. This allows the magnetic heads 14 to record/reproduce data on their corresponding recording tracks at one time.

Fig. 2 illustrates a magnetic record/reproduce apparatus of a second embodiment of the present invention where like components are denoted by like numerals as those of the first embodiment. The apparatus 10A is arranged in which the cylinder 12 itself is moved upward and downward by the action of an actuator 16A while the magnetic heads 14 remains fixed but not moved to desired tracks. Accordingly, the electric motor 13 in the rotating means drives the cylinder 12 to rotate relative to the magnetic heads 14 while the actuator 16A in the linear driving means drives the cylinder 12 to elevate along its axis (in the upward and downward directions in Fig. 2) relative to the magnetic heads 14. Alternatively, the rotating means allows the cylinder 12 and the head unit of the magnetic heads 14 to rotate relative to each other and/or the linear driving means drives the cylinder 12 and the head unit (the magnetic heads 14) to move relative to each other along the axis of the cylinder 12. The other components and their arrangement in the second embodiment shown in Fig. 2 are identical to those of the first embodiment shown in Fig. 1.

In each of the first and second embodiment, the magnetic heads 14 are mounted on a support member 17. As the cylinder 12 and the magnetic heads 14 rotate and move upward and downward relative to each other, the magnetic heads 14 mounted on the support member 17 may be driven around the cylinder 12. Further, both the cylinder 12 and the magnetic heads 14 may be rotated relative to each other. The latter will increase the speed for accessing to data on the perpendicular magnetic recording layer. Alternatively, while the cylinder 12 is not rotated but moved along the axis of the center shaft 11, the magnetic head 14 may be driven to run about the cylinder 12. Also, with the cylinder 12 remaining neither rotated nor moved along the center shaft 11, the magnetic heads 14 may be driven to travel around the cylinder 12 and upward and downward along the axis of the center shaft 11.

In the conventional apparatus using a disk recording medium, the distance between the two bearings is narrow enough to produce a swivel movement thus causing deflection in the rotating motion of the disk. For preventing the magnetic heads from colliding with the disks, it is necessary to maintain a generous distance between the magnetic heads and the disk medium. This embodiment of the present invention employs the cylindrical recording medium which is extended in the width or the thickness (along the axial direction), thus eliminating the above drawback and permitting the magnetic heads to be designed to fly lower height.

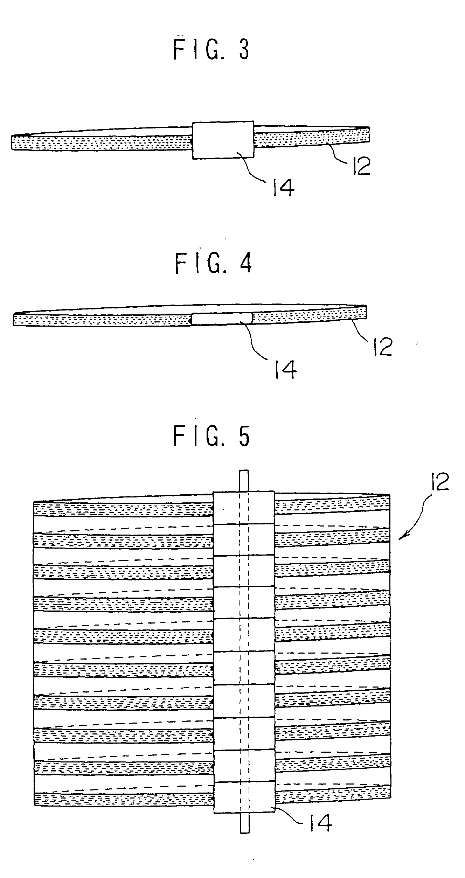

A method of processing input/output signals at ultra-high-speed will now be described referring to Figs. 3 to 9. Figs. 3 and 4 illustrate the relationship between the width of the cylinder 12 extending in parallel with the axis of rotation of the cylinder 12 (referred to as a reference cylinder width hereinafter) and the width of the single head 14 which performs a scanning action in a target input/output period T (second). Assuming that the target input/output period is T (second) , the number of revolutions per second of the cylinder 12 is R (rps), and the pitch between two adjacent tracks is p (µm), the reference cylinder width is expressed by TxRxp (µm). When the head width is S (µm), the relationship shown in Fig. 3 is S>(TxRxp) where the head width is greater than the reference cylinder width. On the other hand, the relationship shown in Fig. 4 is S≤(TxRxp) where the head width is equal to or smaller than the reference cylinder width.

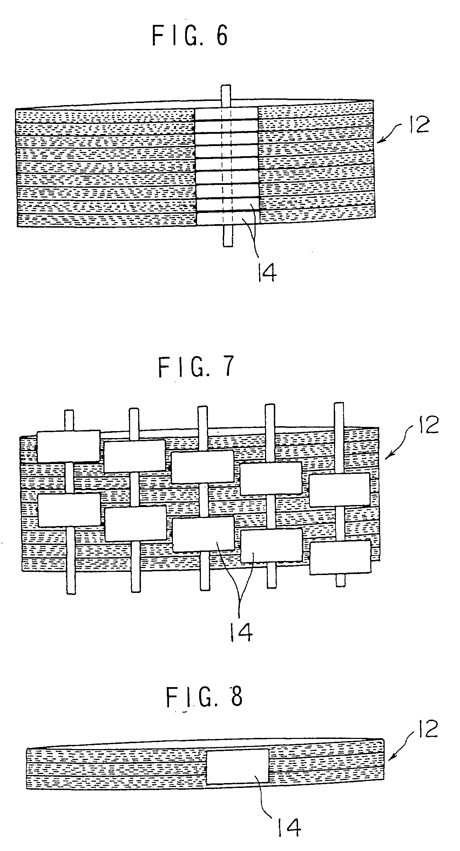

Figs. 5, 6 and 7 illustrates the positional arrangement of a number of the magnetic heads 14 synchronized for simultaneously scanning the corresponding number of the reference cylinder widths in a target input/output period (T) . A linear arrangement of the magnetic heads 14 is shown in Figs. 5 and 6 while the magnetic heads 14 in Fig. 7 are arranged in a spiral configuration.

When a number of the reference cylinder members shown in Fig. 3 are linearly stuck along the axial direction, a redundant space is provided between any two adjacent reference cylinder members as shown in Fig. 5. When a number of the reference cylinder member shown in Fig. 4 are stuck along the axial direction in the same arrangement, any two adjacent reference cylinder members which are equal to or greater in the width than the magnetic head thus develop no space as shown in Fig. 6.

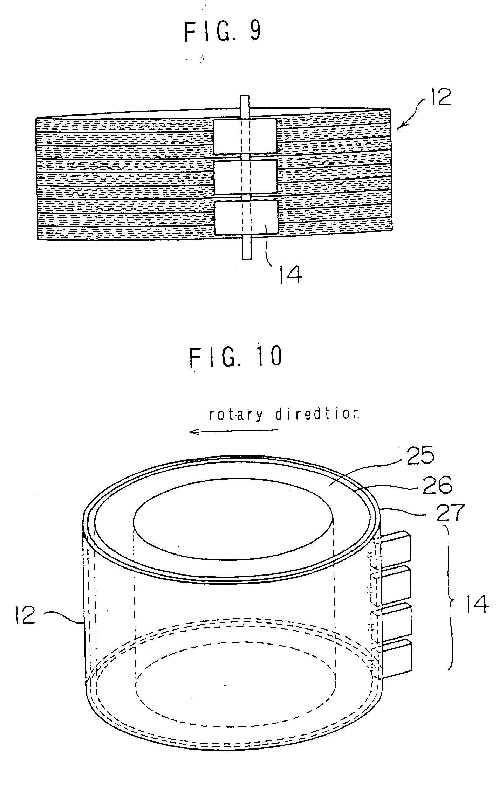

If any of the prior conditions with the arrangement shown in Fig. 3 is modified, for example, the number of revolutions R of the cylinder 12 is tripled or the input/output time T is tripled, the reference cylinder width to be scanned by the single head 14 is tripled as shown in Fig. 8. When three of the reference cylinder members are handled as a unit, their vertical arrangement will develop no spaced as shown in Fig. 9.

Alternatively, Fig. 7 illustrates the magnetic heads 14 arranged in a spiral where the vertical distance between any two magnetic heads 14 is determined by a desired reference cylinder width regardless of the relation between the reference cylinder width and the head width. As the magnetic heads 14 are arranged in a spiral, the input/output time T can remain unchanged.

Fig. 10 is a perspective view of the cylinder 12 and a head unit of the magnetic heads 14 located close to the cylinder 12. The cylinder 12 comprises a cylindrical substrate or cylinder base 25 provided in the innermost, a soft magnetic lining layer 26 mounted on the outer side of the cylinder base 25, and a perpendicular magnetic recording layer 27 coated over the outer side of the soft magnetic lining layer 26. The perpendicular magnetic recording layer 27 is a magnetized record carrying layer having a thickness (δ=0.03 µm) of as small as one hundred thousandth the thickness (t=3 mm) of the cylinder base 25. In this embodiment, the soft magnetic lining layer 26 susceptible to magnetization is provided on the cylinder base 25. Alternatively, the cylinder base 25 may be fabricated of a soft magnetic material such as permalloy, ferrite or silicone iron, thus eliminating the soft magnetic lining layer 26.

The cylindrical medium or cylinder 12 according to the present invention is arranged of a hollow tubular configuration which is easily increased in the mechanical rigidity as compared with the conventional flat disk recording medium. It is generally known for increasing the coercive force and the resolution of the recording medium to use advantageously a higher level of the temperature during the deposition of a magnetic recording layer. As the cylinder 12 is sufficiently high in the rigidity, it can clearly provide a solution to the drawback of deflection of the disk recording medium during the deposition of a magnetic recording layer at a high temperature which is common in the prior art.

There may be developed a number of uniformly magnetized regions, known as magnetic domains, in the soft magnetic material of the soft magnetic lining layer 26. Each magnetic domain is defined by a boundary or a magnetic wall where the magnetic transition occurs thus generating an intensity of undesired magnetic field. Accordingly, whenever the magnetic head passes through the magnetic wall, it may produce a significant noise signal. For eliminating such a noise signal, the magnetic anisotropy on the recording medium has to be applied uniform not to create the magnetic walls. The conventional magnetic disk recording medium has a desired level of the anisotropy applied in radial directions from the center towards the outer edge. However, the application of such anisotropy is a troublesome task as is one of the difficult steps in the layer deposition process. The soft magnetic layer of the tubular cylinder 12 of this embodiment has the magnetic anisotropy applied simply unidirectionally in a direction of rotation. More advantageously, the intensity of the anisotropy can easily be increased by depositing the magnetic layer from an oblique direction.

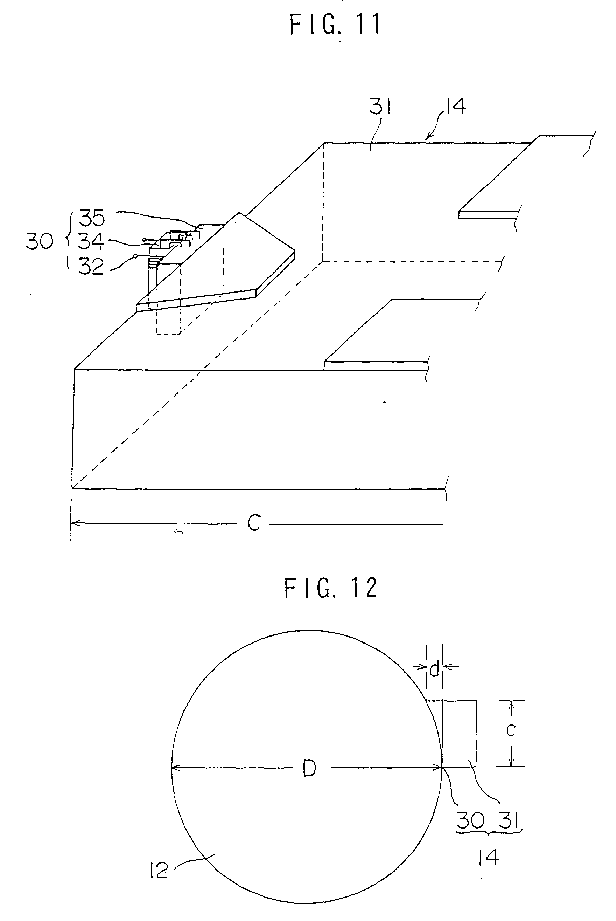

Fig. 11 is an enlarged perspective view of the magnetic head 14. Its record/reproduce working portion is very small in the size, a few micrometers in length and substantially 100 micrometers in height. As is well known by those skilled in the art, the record/reproduce working portion is mounted to a slider 31 which measures about 1.0 to 1.2 mm long, about 0.6 to 0.8 mm wide, and about 0.3 to 0.4 mm thick so that it can be keep a stable gap against the cylinder 12. In terms of structure, the magnetic head 14 includes the slider 31 and its record/reproduce working portion is called a magnetic head primary part 30. The magnetic head 14 is disposed opposite to and adjacent to the recording layer 27 of the cylinder 12. In actual, the diameter of the cylinder 12 is far greater than any of the dimensions of the magnetic head 14 and a known technology for flying the magnetic head 14 over the conventional disk recording medium or flying-head-mechanism can be utilized with equal success. In this embodiment, the distance between the recording layer 27 and the magnetic head primary part 30 may be not greater than 100 nm. While the magnetic head 14 is favorably flown against the surface of the recording layer 27, the distance is preferably minimized for further increasing the density of storage. Also, for improving the transfer rate, a higher speed of the rotating movement will be desired without offsetting the stability. As allowing the perpendicular magnetic recording layer to be mounted on the tubular cylinder, the apparatus of the present invention can be improved in the mechanical rigidity and increased in the high speed operation at a level of stability, thus meeting the above requirements.

As shown in Fig. 11, the magnetic head primary part 30 upon receiving a current across its coil 32 generates an intensity of magnetic flux which is circulated through the primary part 30 for recording the data. The soft magnetic lining layer 26 is essentially provided for providing a conductive corridor of the magnetic flux in the cylinder 12 side of the perpendicular magnetic recording layer in the recording and/or reproducing mode. Alternatively, when the cylinder 12 is made of the above explained material (such as permalloy, ferrite or silicone iron) , it can provide the path of the magnetic flux. Referring to Fig. 11, the magnetic head primary part 30 for perpendicular magnetic recording is a magnetic head(single-pole-type) or an MR head having a magnetic tip portion or main magnetic pole 34 thereof magnetized by the coil 32 to generate the perpendicular magnetic field for recording. As the recording magnetic field extends through the recording layer 27 of the cylinder 12, the data or information is recorded in a form of magnetization. Denoted by 35 is a magnetic pole or return pole which measures about 20 to 100 micrometers wide, about 100 micrometers high, and about 3 micrometers thick. The return pole 35 provides a return path of the recording magnetic field. The advantage of the single-pole-type magnetic head is that the recording magnetic field is developed from the entire and surface of the main magnetic pole 34.

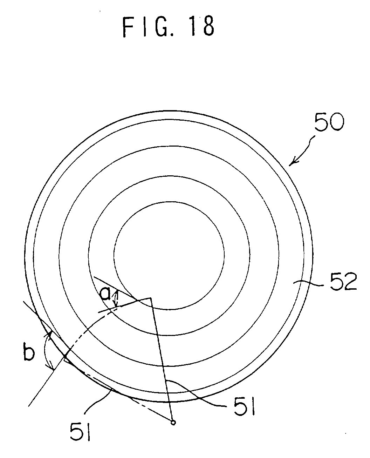

Also, the magnetic record/reproduce apparatus of the present invention with the cylinder 12 allows the magnetic heads 14 to be constantly located with its center line at a right angle to the center axis of the cylinder 12 (recording tracks). Accordingly, as each head 14 scan the track, no skew is produced and the skew angle will thus be nil. Thus, the recording along a narrower track is feasible. The perpendicular magnetic recording method can hence be applied at optimum efficiency on the apparatus of the present invention. As shown in Fig. 18, a conventional disk drive apparatus 50 permits a magnetic head 51 to be moved from one track 52 to another by the action of a rotary type actuator. The angle between the tangent to a recording track and the center line of the magnetic head 51, namely the skew angle (a,b), is not infinite and may be varied between any two adjacent, inner and outer, tracks. When the skew angle is too large, the main magnetic pole is arranged oblique in relation to the tangent to the recording track and its magnetic field extends widely thus increasing the track width. As a result, the track will be inhibited from being narrowed. On the other hand, the use of the tubular cylinder 12 provides substantially zero of the skew angle. The apparatus of the present invention hence requires no approach to the skew angle.

Fig. 12 illustrates an arrangement of the cylinder recording medium in cross section according to the present invention. Shown is the positional relationship between the cylinder 12 having a diameter D of 50 mm, the magnetic head primary part 30, and the slider 31. The slider 31 disposed opposite to the cylinder 12 has a planer floating side thereof disposed tangent to the outer side of the cylinder 12. The slider 31 has a length c of substantially 1 mm and is spaced by the distance d of about 10 micrometer from the surface of the cylinder 12. Accordingly, when the cylinder 12 stops its motion and the slider 31 sits directly on the cylinder 12, the contact area between the slider 31 and the cylinder 12 remains very small. Hence, the stiction problem of the slider 31 which is a major drawback to be eliminated in the conventional magnetic disk drive will hardly be generated. As a result, the formation of delicate undulations called texture on the surface of the magnetic recording medium cylinder 12 will be unnecessary. Also, the magnetic head 14 can be disposed closer to the recording layer of the cylinder 12, thus improving the recording density to a much higher level than that of the disk recording medium.

In addition, the surface of the slider 31 against the cylinder needs not to be finished with a moderately arcuate surface or a crowning which is a common technique with the disk magnetic recording medium. Accordingly, the slider 31 or the magnetic head 14 can be fabricated with simplicity. Moreover, not required is a mechanism for retracting the magnetic heads from the recording medium at the state of standstill, which is commonly used in a conventional magnetic disk drive apparatus. As a result, the apparatus of this embodiment can be more simplified in the construction than the disk drive apparatus.

It is a common practice for transmission of digital data to dispatch a data and its clock signal in two different channels because the clock signal is used for reading the voltage of a data waveform at appropriate intervals of time or at optimum timings. However, the conventional disk drive apparatus is not designed for saving directly the clock signal used for transmission of digital data. Two recording heads are needed for recording the data and its clock signal at the same time. Simultaneously, two tracks are occupied at one time hence declining the overall size of recording area to a half. For compensation, the conventional disk drive apparatus employs a method of reproducing the clock signal with an electronic circuit at the reproduce mode.

The process of reproducing the clock signal with the electronic circuit commonly goes as follows. A data indicative of the clock timing is saved in the front end or clock reproducing region (termed as a sync-area, e.g. a few tens bytes) of each data block (termed as a sector, e.g. one kilobyte). The main data to be recorded is saved after the sync-area. While the magnetic head runs through the sync-area, it can read out the clock reproducing signal. The clock reproducing signal is transferred as an input signal to a PLL circuit which is an oscillator circuit synchronized in the frequency phase in order to reproduce a clock signal which is then used for reading of the data. As the sync-area occupies the front end of a data area of each sector, the storage size will be offset. When the revolution of the disk is mechanically varied with the head reading out the data at the timing of the clock signal reproduced from the sync-area, the timing of the clock signal may gradually be diverted from that of the records to be readout. For avoiding such timing error, the PLL circuit is used to correct the phase of the clock signal on the basis of its waveform data during the reading of the data.

The clock signal is compensated while the reproducing data information is being read out. If the period of no signal is continued significantly, the duration of carrying out no compensation will extend thus increasing the clock timing error. This may often occur when a string of "0" signal or "1" signal are continuously received in the digital information. For having the clock signal compensation data without fault, the signal is generally encoded for introducing inversion of the magnetic pole within a limited number of bits (normally, no more than 10 bits) to eliminate the no signal zone. This restricts the input digital data thus declining the efficiency of the code-efficiency.

The magnetic record/reproduce apparatus of the present invention includes a plurality of the magnetic heads 14 against the cylinder 12, hence allowing the data to be recorded and/or reproduced in while the clock information signal is being reproduced. Also, as the clock signal is applicable to all the data tracks, it can be saved in theoretically a single track. Unlike the disk drive apparatus, the data region in the recording area will favorably be preserved. In practice, at least one track on the cylinder 12 is assigned to hold the clock signal (cf. it is desired to have some backup tracks for the clock signal, otherwise the data in the tracks may hardly be accessed if the single clock signal storage track is fractured) and used for timing the reading of the data from any desired track or writing the data into the track. The data is recorded and/or reproduced at the timing of the clock signal simultaneously while the clock signal is being reproduced from the track. As the sync-area is not needed, the restriction in the encoding on the existing disk drive apparatus can be eliminated and the efficiency of the encoding can be maintained at 100 %. More specifically, the storage size or recording area available can be increased.

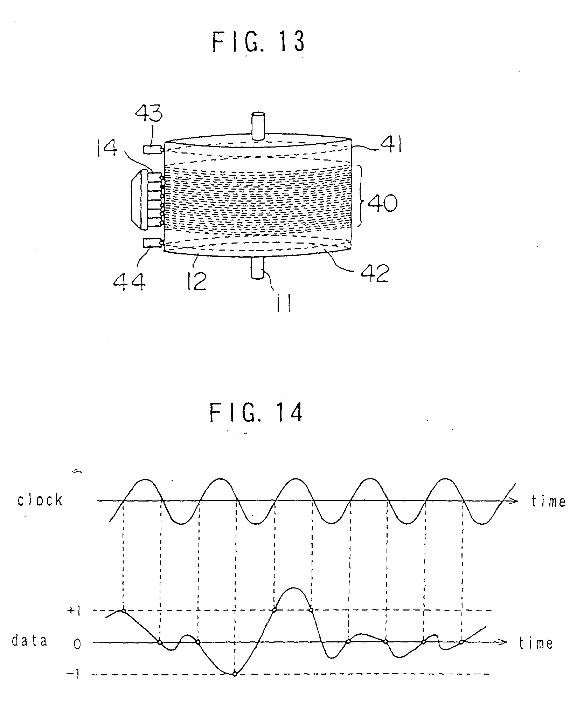

Fig. 13 illustrates a clock mechanism consisting mainly of a couple of exclusive tracks 41 and 42 for storage of the clock signal which are provided on both ends of the cylinder 12 or other than a data storage area 40 of the cylinder 12. The two clock signal storage tracks 41 and 42 are arranged so that each track equally holds the clock signal for insuring the clock signal against loss. As the motion of the cylinder mechanism unlike the disk drive mechanism is mechanically stable and rarely produces errors from a change in the revolution, the two signal clock tracks 41 and 42 are not limited to the both ends of the cylinder 12 provided that their presence does not disturb the installation or movement of the data recording/reproducing heads. The clock signal is reproduced from the clock signal tracks 41 and 42 by a couple of stationary, dedicated read heads 43 and 44 respectively as shown in Fig. 13. The clock signal is used for timing the reading of the data from the data tracks and sampling voltage levels from the head-regenerative-waveform. Alternatively, at least one of the tracks in the data storage area 40 may be assigned as the clock signal storage track.

Fig. 14 shows the regenerative clock signal with time at the upper and the data-signal-waveform with time at the lower. For example, the data-signal can be extracted from the reproducing signal at the timing of zero crossing of the clock signal. As a result, no particular encoding process with the clock signal is needed in the recording mode and the efficiency of the overall encoding will be increased. Also, as the clock signal storage area is a very small portion of the entire storage area, the data can be saved at higher effectiveness. As compared with the conventional disk drive apparatus, the apparatus with the cylinder recording medium of this invention can significantly be increased in the capacity of storage.

The magnetic record/reproduce apparatus of the present invention is not limited to the arrangement of the embodiment shown in Figs. 1 and 2 where the cylinder 12 has the perpendicular magnetic recording layer provided on the outer surface thereof in combination with the magnetic heads 14. Alternatively, the perpendicular magnetic recording layer may be provided on the inner surface (or both the inner and outer surfaces) of the cylinder 12 in combination with the head unit of the magnetic heads arranged opposite thereto.

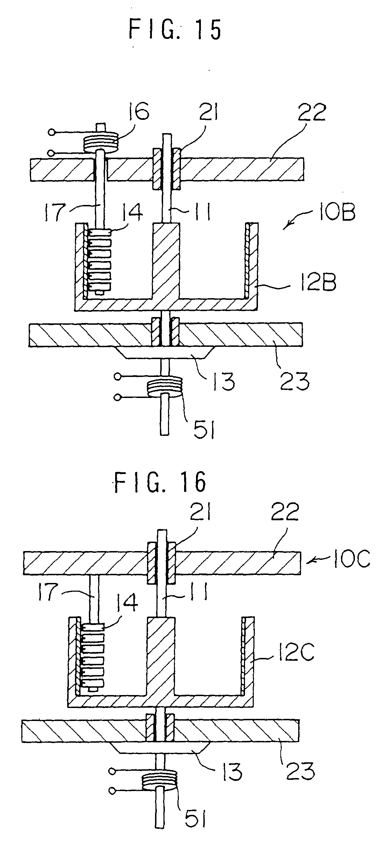

Figs. 15 and 16 illustrates other embodiments of the present invention where the perpendicular magnetic recording layer is provided on the inner surface of a cylinder. Fig. 15 shows a third embodiment of the magnetic record/reproduce apparatus 10B including an electric motor 13 as the rotating means for revolution of the cylinder 12B. The linear driving means comprises an actuator 16 for driving the magnetic heads 14 and another actuator 51 for driving the cylinder 12B. By the action of the two actuators 16 and 51, the magnetic heads 14 and the cylinder 12B are moved along the axial direction of the cylinder 12B. More specifically, the revolution of the cylinder 12B and the axial movement of the magnetic heads 14 and the cylinder 12B can be carried out simultaneously.

Fig. 16 illustrates a fourth embodiment of the magnetic record/reproduce apparatus 10C where the rotating means is an electric motor 13 for revolution of a cylinder 12C in a specific direction. The linear driving means is an actuator 51 for axial movement of the cylinder 12C. As a result, the revolution and the axial movement of the cylinder 12C can be carried out simultaneously.

In both the arrangements, the magnetic heads 14 are located inside the cylinder 12B or 12C as arranged adjacent to the perpendicular magnetic recording layer provided on the inner surface of the cylinder 12B or 12C and their single-pole-type magnetic head disturbance by external magnetic fluxes can successfully be eliminated. The storage of the clock signal can also be implemented in the same manner as of the previous embodiment with the magnetic recording layer provided on the outer surface of the cylinder shown in Figs. 1 and 2.

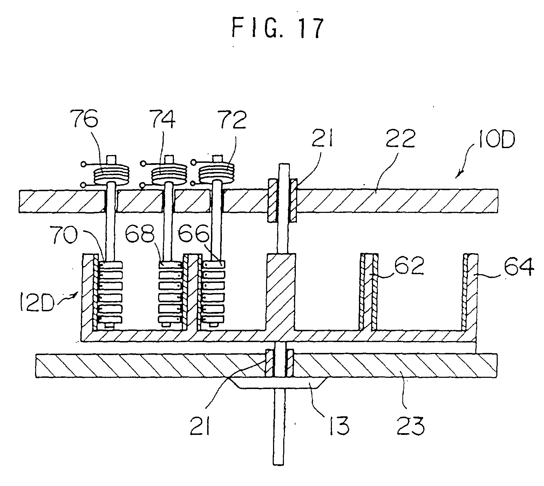

Fig. 17 illustrates a fifth embodiment of the magnetic record/reproduce apparatus 10D. A cylinder 12D of the magnetic record/reproduce apparatus 10D comprises a first cylinder portion 62 and a second cylinder portion 64 arranged concentrically. The second cylinder portion 64 has a perpendicular magnetic recording layer provided on the inner surface thereof. The first cylinder portion 62 has two perpendicular magnetic recording layers provided on both the outer and inner surfaces thereof and facing two head units of magnetic heads 66 and 68 respectively. An unit of magnetic heads 70 are provided opposite to the inner recording layer of the second cylinder 64.

In this embodiment, the rotating means is an electric motor 13 for driving the cylinder 12D. By the action of the motor 13, the first and second cylinder portion 62 and 64 of the cylinder 12D can be rotated in a specific direction. The linear driving means comprises a set of actuators 72, 74, and 76 for driving the units of the magnetic heads 66, 68, and 70 respectively to move along the axis of the cylinder 12D. This embodiment can increase the storage area with a relatively simple construction.

The magnetic record/reproduce apparatus of the present invention allows each planer head to come into linear contact with the surface of the cylinder thus eliminating the event of stiction which may commonly occur on a disk drive apparatus. More specifically, as the slider rests directly on the surface of the curved-face of the cylinder when is not in action, their contact area can be too small to cause the event of stiction for attracting the slider which is one of the primary drawbacks of the disk drive apparatus. As a result, the cylinder will not need to have a texture of minimal unevenness provided on its magnetic recording surface which is a common scheme on any conventional magnetic disk recording medium so that the head can be put in closer proximity to recording layer to attain higher magnetic density. Also, each magnetic head can be positioned closer to the magnetic recording layer of the cylinder, hence increasing the storage density. Moreover, as the moderate arcuate finish or crowning which is commonly provided on the slider in the conventional magnetic disk drive apparatus is not necessary, the slider or the magnetic head can be fabricated in simplicity. It is also unnecessary to have the shunting mechanism for retracting the magnetic heads from the recording medium in a conventional magnetic disk drive apparatus. Accordingly, the apparatus of the present invention can be much simpler in the construction than any disk drive apparatus.

The magnetic record/reproduce apparatus of the present invention has the axis of the cylinder held at a right angle to the center line of each magnetic heads, hence decreasing the skew angle to substantially zero. This permits the recording track to be easily narrowed for meeting the size of the single-pole-type magnetic head, which may be difficult on the disk drive apparatus. Accordingly, the apparatus of the present invention can be increased in the density of storage than any disk drive apparatus, thus improving the storage capacity.

The magnetic record/reproduce apparatus of the present invention has the fistulous-pipe type cylinder medium arranged of a hollow, tubular shape which is higher in the mechanical rigidity than the conventional planer flat-type disk recording medium. It is known that the higher the temperature in the deposition of the recording layer the higher the coercive force and the resolution can be achieved. As the cylinder has a higher level of the mechanical rigidity, it can completely eliminate undesired event of deflection of the medium when its magnetic recording layer is deposited under a high temperature. Accordingly, the process of depositing the recording layer will be conducted at a higher temperature.

The magnetic record/reproduce apparatus of the present invention includes the plurality of the magnetic heads, allowing the data to be recorded/reproduced in simultaneously while the clock signal is being retrieved. As the clock information is applicable to all of the data tracks, it can be saved in one or two tracks and declination in the storage capacity will be negligible. For example, the clock signal may be saved in two specific tracks (one of which serving as a backup track) provided on both ends of the recording surface of the cylinder. Accordingly, the clock signal can be retrieved from its specific track and used for timing the recording and/or reproducing of data on the recording surface. The data is recorded and/or reproduced at timing of the clock signal simultaneously while the clock signal is being retrieved from the specific track. This eliminate the use of any sync-areas, thus saving the areas for storage of more data and increasing the overall storage capacity. Also, as the correction for clock timing error caused by a change in the revolution is unnecessary, the encoding can be free from its restriction which is applied to the disk drive apparatus. According the efficiency of the encoding will be increased to substantially 100 %, thus improving the storage capacity.

The conventional disk drive apparatus with the planer disk recording medium has a small distance between its bearings and may be deflected in a conical configuration or pestle-like fluttering during the movement. This necessarily increases the distance between the surface of the cylinder and the heads. In reverse, the magnetic record/reproduce apparatus of the present invention has the cylinder with a considerable length where the above drawback can be eliminated thus allowing the heads to be flown at a minimum distance.

The magnetic record/reproduce apparatus of the present invention has the magnetic anisotropy in the soft magnetic layer to be oriented in the direction of rotation and also increased by depositing the layer from an oblique direction. This will inhibit the generation of magnetic walls in the soft magnetic layer thus minimizing the effect of noises.

Thanking to the plurality of magnetic heads as well as the above described features, the density of records can be increased thus improving the rate of data transfer without increasing the number of revolutions of the cylinder. In addition, the perpendicular magnetic heads can easily be increased in the speed of response as is compatible with a variety of conventional peripheral technologies in the magnetic recording field.

Furthermore, as the cylinder is made of a magnetic material and arranged to have the magnetic recording layer provided on the inner side thereof , it can magnetically shield the single-pole-type magnetic heads from noises generated by external magnetic fields, hence improving the accuracy of the magnetic record/reproduce actions.
According to its broadest aspect the invention relates to a magnetic record/reproduce apparatus for recording/reproducing large amounts of data at ultra-high-speed using a perpendicular magnetic recording mode, comprising: at least a cylinder (12) having a magnetic recording layer (27) provided on at least the inner or outer surface thereof; a plurality of magnetic heads (14) arranged to face the magnetic recording layer (27) of the cylinder (12); and a drive mechanism (13, 16) for rotating at least one of the cylinder (12) and the plurality of the magnetic heads (14) in relation to the other.
It should be noted that the objects and advantages of the invention may be attained by means of any compatible combination(s) particularly pointed out in the items of the following summary of the invention.

### SUMMARY OF THE INVENTION

1. A magnetic record/reproduce apparatus for recording/reproducing large amounts of data at ultra-high-speed using a perpendicular magnetic recording mode, comprising:
   at least a cylinder (12) having a perpendicular magnetic recording layer (27) provided on at least the inner or outer surface thereof;
   a plurality of magnetic heads (14) arranged to face the perpendicular magnetic recording layer(27) of the cylinder (12);
   a drive mechanism(13,16) for rotating at least one of the cylinder (12) and the plurality of the magnetic heads (14) in relation to the other while moving at least the cylinder (12) or the plurality of magnetic heads(14) along the axial direction of the cylinder(12); and
   a record/reproduce means for recording and/or reproducing data oh the perpendicular magnetic recording layer(27) with the plurality of magnetic heads(14).
2. A magnetic record/reproduce apparatus
   , wherein the plurality of magnetic heads(14) are linearly aligned in a row along the axial direction of the cylinder (12).
3. A magnetic record/reproduce apparatus
   wherein the plurality of magnetic heads(14) are arranged in a spiral form around the cylinder(12).
4. A magnetic record/reproduce apparatus
   wherein the drive mechanism(13,16) is arranged for rotating the cylinder(12) about its axis while moving the plurality of magnetic heads (14) along the axial direction of the cylinder(12).
5. A magnetic record/reproduce apparatus
   , wherein the drive mechanism(13,16) is arranged for rotating the cylinder(12) about its axis while moving the cylinder(12) along its axial direction.
6. A magnetic record/reproduce apparatus
   wherein the drive mechanism(13,16) is arranged for moving the cylinder(12) along its axial direction while driving the plurality of magnetic heads (14) about the axis of the cylinder(12) to turn about the cylinder (12).
7. A magnetic record/reproduce apparatus
   , wherein the drive mechanism(13,16) is arranged for moving the plurality of magnetic heads (14) along the axial direction of the cylinder (12) while rotating the plurality of magnetic needs(14) about the axis of the cylinder(12) to turn about the cylinder(12).
8. A magnetic record/reproduce apparatus
   , wherein the perpendicular magnetic recording layer(27) is provided on the outer surface of the cylinder(12) with the plurality of magnetic heads(14) arranged to face the outer surface of the cylinder(12).
9. A magnetic record/reproduce apparatus
   , wherein the perpendicular magnetic recording layer(27) is provided on the inner surface of the cylinder(12) with the plurality of magnetic heads(14) arranged to face the inner surface of the cylinder (12).
10. A magnetic record/reproduce apparatus
   , wherein the perpendicular magnetic recording layer(27) is provided on each of the inner and outer surfaces of the cylinder(12) with the plurality of magnetic heads (14) arranged to face each of the inner and outer surfaces of the cylinder(12).
11. A magnetic record/reproduce apparatus
   wherein two or more of the cylinders(62,64) which are different in the diameter are concentrically arranged and the plurality of magnetic heads(66,68,70) are arranged to face each surface of the cylinders(62,64).
12. A magnetic record/reproduce apparatus
   , wherein the cylinder(12) comprises a cylinder base(25) and a soft magnetic lining layer(26) provided on the outer surface of the cylinder base(25) and the perpendicular magnetic recording layer (27) is deposited over the outer side of the soft magnetic lining layer (26).
13. A magnetic record/reproduce apparatus
   wherein the cylinder(12) is made of a soft magnetic material and the perpendicular magnetic recording layer (27) is deposited over the outer surface of the cylinder (12).
14. A magnetic record/reproduce apparatus
   wherein the cylinder(12) is made of permalloy, ferrite, or silicone iron.
15. A magnetic record/reproduce apparatus
   wherein each of the magnetic heads (14) comprises a magnetic head primary part (30) and a slider(31) carrying the magnetic head primary part (30) and the magnetic head primary part (30) includes a single-pole-type magnetic head.
16. A magnetic record/reproduce apparatus
   wherein the skew angle between the magnetic head primary part(30) of each magnetic head(14) and its corresponding recording track is substantially nil.
17. A magnetic record/reproduce apparatus
   wherein the slider(31) of each magnetic head(14) remains in direct contact with the cylinder(12) when is not in action.
18. A magnetic record/reproduce apparatus
   , wherein a clock signal is recorded on a specific one of the recording tracks on the perpendicular magnetic recording layer(27) of the cylinder(12) and used for timing the writing and/or reading of data on the perpendicular magnetic recording layer(27).
19. A magnetic record/reproduce apparatus
   , wherein a clock signal is recorded on a specific track(41,42) provided on at least one end of the perpendicular magnetic recording layer(27) of the cylinder (12) and used for timing the writing and/or reading of data on the perpendicular magnetic recording layer (27).

A magnetic record/reproduce apparatus
wherein the data can be recorded and/or reproduced on the perpendicular magnetic recording layer (27) at the timing of the clock signal simultaneously while the clock signal is being retrieved from the specific track (41, 42).

## Claims

1. A magnetic record/reproduce apparatus for recording/reproducing large amounts of data at ultra-high-speed using a perpendicular magnetic recording mode, comprising:
at least a cylinder(12) having a perpendicular magnetic recording layer (27) provided on at least the inner or outer surface thereof;
a plurality of magnetic heads (14) arranged to face the perpendicular magnetic recording layer(27) of the cylinder (12);
a drive mechanism(13,16) for rotating at least one of the cylinder (12) and the plurality of the magnetic heads (14) in relation to the other while moving at least the cylinder (12) or the plurality of magnetic heads(14) along the axial direction of the cylinder(12); and
a record/reproduce means for recording and/or reproducing data on the perpendicular magnetic recording layer(27) with the plurality of magnetic heads(14).

2. A magnetic record/reproduce apparatus according to claim 1, wherein the plurality of magnetic heads(14) are linearly aligned in a row along the axial direction of the cylinder (12).

3. A magnetic record/reproduce apparatus according to claim 1, wherein the plurality of magnetic heads(14) are arranged in a spiral form around the cylinder(12).

4. A magnetic record/reproduce apparatus according to any of claims 1 to 3, wherein the drive mechanism(13,16) is arranged for rotating the cylinder(12) about its axis while moving the plurality of magnetic heads (14) along the axial direction of the cylinder(12).

5. A magnetic record/reproduce apparatus according to any of claims 1 to 3, wherein the drive mechanism(13,16) is arranged for rotating the cylinder(12) about its axis while moving the cylinder(12) along its axial direction.

6. A magnetic record/reproduce apparatus according to any of claims 1 to 3, wherein the drive mechanism(13,16) is arranged for moving the cylinder(12) along its axial direction while driving the plurality of magnetic heads (14) about the axis of the cylinder(12) to turn about the cylinder (12),
and/or wherein preferably the drive mechanism(13,16) is arranged for moving the plurality of magnetic heads(14) along the axial direction of the cylinder (12) while rotating the plurality of magnetic needs(14) about the axis of the cylinder(12) to turn about the cylinder (12),
and/or wherein preferably the perpendicular magnetic recording layer (27) is provided on the outer surface of the cylinder(12) with the plurality of magnetic heads(14) arranged to face the outer surface of the cylinder(12).

7. A magnetic record/reproduce apparatus according to any of claims 1 to 7, wherein the perpendicular magnetic recording layer (27) is provided on the inner surface of the cylinder(12) with the plurality of magnetic heads(14) arranged to face the inner surface of the cylinder (12),
and/or wherein preferably the perpendicular magnetic recording layer(27) is provided on each of the inner and outer surfaces of the cylinder(12) with the plurality of magnetic heads (14) arranged to face each of the inner and outer surfaces of the cylinder (12),
and/or wherein preferably two or more of the cylinders(62,64) which are different in the diameter are concentrically arranged and the plurality of magnetic heads(66,68,70) are arranged to face each surface of the cylinders (62, 64),
and/or wherein preferably the cylinder(12) comprises a cylinder base(25) and a soft magnetic lining layer(26) provided on the outer surface of the cylinder base(25) and the perpendicular magnetic recording layer (27) is deposited over the outer side of the soft magnetic lining layer (26).

8. A magnetic record/reproduce apparatus according to any of claims 1 to 11, wherein the cylinder(12) is made of a soft magnetic material and the perpendicular magnetic recording layer (27) is deposited over the outer surface of the cylinder (12),
and/or wherein preferably the cylinder(12) is made of permalloy, ferrite, or silicone iron,
and/or wherein preferably each of the magnetic heads (14) comprises a magnetic head primary part (30) and a slider (31) carrying the magnetic head primary part (30) and the magnetic head primary part (30) includes a single-pole-type magnetic head,
and/or wherein preferably the skew angle between the magnetic head primary part(30) of each magnetic head(14) and its corresponding recording track is substantially nil.

9. A magnetic record/reproduce apparatus according to claim 15 or 16, wherein the slider(31) of each magnetic head(14) remains in direct contact with the cylinder(12) when is not in action,
and/or wherein preferably a clock signal is recorded on a specific one of the recording tracks on the perpendicular magnetic recording layer(27) of the cylinder (12) and used for timing the writing and/or reading of data on the perpendicular magnetic recording layer (27),
and/or wherein preferably a clock signal is recorded on a specific track(41,42) provided on at least one end of the perpendicular magnetic recording layer (27) of the cylinder (12) and used for timing the writing and/or reading of data on the perpendicular magnetic recording layer (27),
and/or wherein preferably the data can be recorded and/or reproduced on the perpendicular magnetic recording layer (27) at the timing of the clock signal simultaneously while the clock signal is being retrieved from the specific track (41,42).

10. A magnetic record/reproduce apparatus for recording/reproducing large amounts of data at ultra-high-speed using a perpendicular magnetic recording mode, comprising:
at least a cylinder (12) having a magnetic recording layer (27) provided on at least the inner or outer surface thereof;
a plurality of magnetic heads (14) arranged to face the magnetic recording layer (27) of the cylinder (12); and
a drive mechanism (13, 16) for rotating at least one of the cylinder (12) and the plurality of the magnetic heads (14) in relation to the other.
